# DEMANDE DE BREVET EUROPEEN

(11) **EP 1 677 556 A1**
(43) Date de publication de la demande: **05.07.2006**
(21) Numéro de dépôt: 05301106.0
(22) Date de dépôt: 23.12.2005
(51) Int. Cl.: H04Q 7/34

(54) **Procédé et système pour l'exploitation d'un réseau de communications mobiles**

(30) Priorité: 31.12.2004 FR 0453275
(71) Demandeur: EVOLIUM SAS, 75008 Paris (FR)
(72) Inventeur: Brethereau, Alain, 78220, Viroflay (FR); De Mathan, Béatrix, 75016, Paris (FR); Houllier, Jean-Roch, 91240, Saint-Michel sur Orge (FR); Brigant, Eric, 78140, Velizy-Villacoublay (FR); Landrault, Antoine, 78120, Rambouillet (FR)
(74) Mandataire: El Manouni, Josiane

(57) **Abrégé**

Un des objets de la présente invention est un procédé pour l'exploitation d'un réseau de communications mobiles, ledit procédé comportant des étapes de :
- définition (20) d'au moins un critère d'appartenance d'objets réseau à au moins un groupe d'objets réseau, ledit groupe étant aussi appelé zone objet,
- constitution (21) d'au moins une zone objet, à partir d'objets réseau vérifiant ledit au moins un critère,
- réalisation (22) d'au moins une opération d'optimisation de réseau radio, utilisant ladite au moins une zone objet ainsi constituée.

## Description

La présente invention concerne d'une manière générale les systèmes de communications mobiles.

D'une manière générale, les systèmes de communications mobiles font l'objet de normalisation, et pour plus d'informations on pourra se reporter aux normes correspondantes, publiées par les organismes de normalisation correspondants.

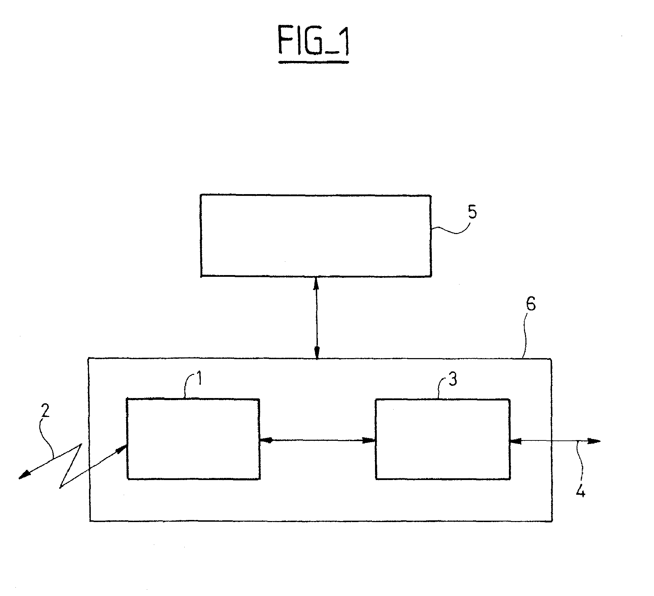

On rappelle simplement qu'un système de communications mobiles peut, comme rappelé sur la figure 1, se décomposer en trois sous-ensembles :
- un sous-système radio, noté 1, ou « réseau radio », essentiellement en charge des fonctions de transmission sur l'interface radio (notée 2) et de gestion des ressources radio, ce sous-système radio étant aussi appelé BSS (« Base Station Sub-System ») dans des systèmes tels que notamment le GSM (« Global System for Mobile communications ») ou encore RNS (« Radio Network Subsystem ») dans des systèmes tels que notamment l'UMTS (« Universal Mobile Telecommunications System»), et ce sous-système radio comportant lui-même des éléments de réseau tels que des stations de base (appelés aussi BTS (pour « Base Transceiver Station ») dans des systèmes tels que le GSM, ou Node B dans des systèmes tels que l'UMTS) et des contrôleurs de stations de base (appelés aussi BSC (pour « Base Station Controller») dans des systèmes tels que le GSM, ou RNC (pour « Radio Network Controller ») dans des systèmes tels que l'UMTS),
- un sous-système d'acheminement, noté 3, ou « réseau fixe », ou NSS (« Network Sub-System »), essentiellement en charge des fonctions d'établissement des appels et de gestion de la mobilité, ce sous-système d'acheminement étant en relation d'une part avec le sous-système radio et d'autre part (comme illustré en 4) avec des réseaux extérieurs (non illustrés spécifiquement),
- un sous-système d'exploitation et de maintenance, noté 5, ou OSS (« Operation Sub-System »), permettant essentiellement à l'opérateur de gérer son réseau (noté 6, formé du « réseau radio » 1 et du « réseau fixe » 3).

L'exploitation du réseau recouvre différentes tâches, dont une particulièrement importante correspond à l'optimisation du réseau radio. D'une manière générale, dans cette tâche d'optimisation du réseau radio, l'objectif pour l'opérateur (appelé aussi dans ce qui suit optimiseur, ou utilisateur) est d'atteindre la qualité de service souhaitée tout en utilisant aussi efficacement que possible les ressources radio disponibles.

L'optimisation du réseau radio recouvre elle-même différentes fonctions, notamment des fonctions de diagnostic de problèmes du réseau et/ou d'analyse de la qualité de service, et des fonctions d'optimisation de paramétrage radio sur la base de tels diagnostic et/ou analyse.

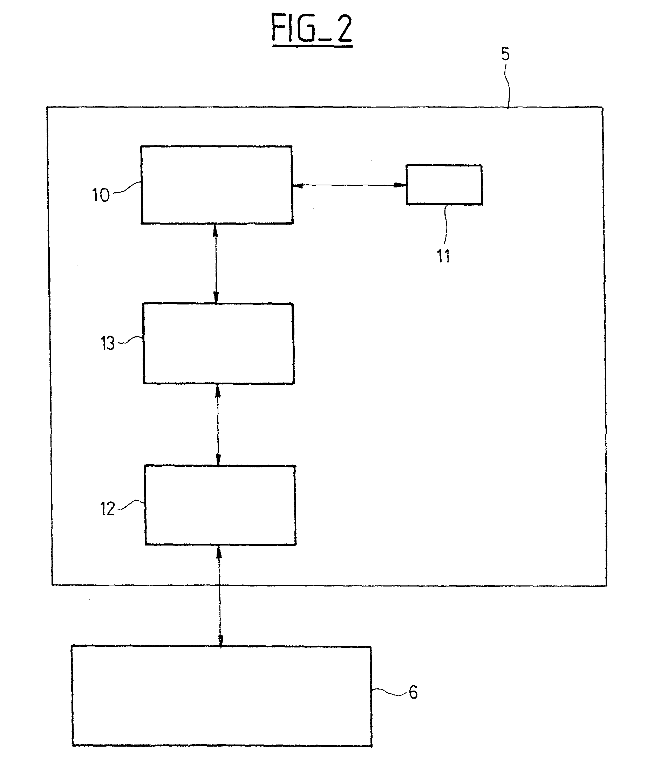

On rappelle en outre qu'un système pour l'exploitation d'un réseau de communications mobiles peut lui-même, comme rappelé sur la figure 2, se décomposer en trois sous-systèmes :
- un sous-système noté 10, en charge essentiellement des différents traitements correspondant à la mise en oeuvre des différentes tâches d'exploitation, ce sous-système étant en relation avec l'opérateur via des stations de travail notées 11,
- un sous-système noté 12, en charge essentiellement d'appliquer au réseau 6 différentes commandes issues du sous-système 10, et de recevoir du réseau 6 différentes données nécessaires aux traitements réalisés par le sous-système 10,
- un sous-système, noté 13, réalisant des fonctions de communication entre les sous-systèmes 10 et 12.

D'une manière générale, l'accroissement du trafic à gérer et, par conséquent, le nombre toujours plus grand d'éléments de réseau mis en place, et donc de paramètres à traiter, mais aussi la variété et la complexité des informations hétérogènes à analyser (qu'elles proviennent du réseau lui-même ou de son environnement géographique) rendent extrêmement complexes les tâches d'optimisation, et il devient alors important de simplifier et/ou faciliter le travail de l'opérateur. La présente invention permet notamment de répondre à ces besoins.

Un des objets de la présente invention est un procédé pour l'exploitation d'un réseau de communications mobiles, ledit procédé comportant des étapes de :
- définition d'au moins un critère d'appartenance d'objets réseau à au moins un groupe d'objets réseau, ledit groupe étant aussi appelé zone objet,
- constitution d'au moins une zone objet, à partir d'objets réseau vérifiant ledit au moins un critère,
- réalisation d'au moins une opération d'optimisation de réseau radio, utilisant ladite au moins une zone objet ainsi constituée.

Un autre objet de la présente invention est un système pour l'exploitation d'un réseau de communications mobiles, ledit système comportant :
- des moyens pour définir au moins un critère d'appartenance d'objets réseau à au moins un groupe d'objets réseau, ledit groupe étant aussi appelé zone objet,
- des moyens pour constituer au moins une zone objet, à partir objets réseau vérifiant ledit au moins un critère,
- des moyens pour réaliser au moins une opération d'optimisation de réseau radio, utilisant ladite au moins une zone objet ainsi constituée.

Un autre objet de la présente invention est une station de travail pour l'exploitation d'un réseau de communications mobiles, ladite station comportant :
- des moyens pour permettre à l'utilisateur de définir au moins un critère d'appartenance d'objets réseau à au moins un groupe d'objets réseau, ledit groupe étant aussi appelé zone objet.

Un autre objet de la présente invention est une station de travail pour l'exploitation d'un réseau de communications mobiles, ladite station comportant :
- des moyens pour permettre à l'utilisateur de réaliser au moins une opération d'optimisation de réseau radio, utilisant au moins un groupe d'objets réseau vérifiant au moins un critère d'appartenance d'objets réseau à au moins un groupe d'objets réseau, ledit groupe étant aussi appelé zone objet.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système cellulaire de communications mobiles,
- la figure 2 rappelle l'architecture générale d'un système pour l'exploitation d'un réseau cellulaire de communications mobiles,
- la figure 3 est destinée à illustrer les étapes d'un procédé suivant un des différents aspects de l'invention,
- les figures 4 et 5 sont destinées à illustrer divers types de mouvements pouvant être étudiés au moyen d'un exemple particulier de zones objet, correspondant à des zones d'adjacence, suivant un des différents aspects de l'invention.

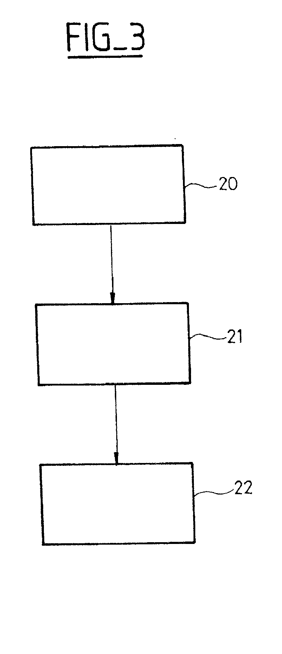

Suivant un de ses différents aspects, la présente invention propose un procédé pour l'exploitation d'un réseau de communications mobiles, comportant, comme illustré sur la figure 3 :
- une étape 20 de définition d'au moins un critère d'appartenance d'objets réseau à au moins un groupe d'objets réseau, ledit groupe étant aussi appelé zone objet,
- une étape 21 de constitution d'au moins une zone objet, à partir d'objets réseau vérifiant ledit au moins un critère,
- une étape 22 de réalisation d'au moins une opération d'optimisation de réseau radio, utilisant ladite au moins une zone objet ainsi constituée.

La présente invention est applicable à tous types d'objets réseau pouvant être manipulés ou gérés dans le cadre d'opérations d'optimisation du réseau radio, qu'il s'agisse d'objets logiques (tels que notamment : cellules, liens radio ou terrestres...etc.), ou d'objets physiques (tels que notamment : éléments de réseau, ensembles d'élements de réseau, ...etc.).

Divers critères d'appartenance d'objets réseau à une zone objet peuvent être définis. En outre, des combinaisons de plusieurs critères peuvent être utilisées.

Une zone objet est constituée à partir d'objets réseau vérifiant le ou les critères considérés. En d'autres termes les objets réseau vérifiant ce ou ces critères sont sélectionnés pour constituer une zone objet.

A titre d'exemple de critères, on peut citer :
- des critères basés sur des paramètres de configuration radio,
- des critères basés sur des indicateurs de qualité de service,
- des critères basés sur des paramètres de topologie du réseau,
- des critères basés sur des caractéristiques de cellules,
- des critères basés sur des paramètres de relations de voisinage entre cellules,
- des critères de type géo-marketing,
- des critères de type géographique,
- des critères de type temporel,
- ... etc.

Les paramètres de configuration radio peuvent être des paramètres logiques (tels que par exemple des paramètres de contrôle d'accès, de contrôle de puissance, de contrôle de transfert inter-cellulaire ou « handover », ...etc) ou physiques (tels que par exemple des paramètres de puissance d'émission de stations de base, ...etc.).

A titre d'exemple de sélection d'objets réseau vérifiant un critère basé sur des paramètres de configuration radio, on pourra sélectionner par exemple toutes les cellules telles qu'un paramètre de contrôle d'accès est supérieur ou inférieur à une valeur seuil donnée, par exemple on pourra sélectionner toutes les cellules telles que le paramètre RX_LEV_ACCESS_MIN (défini dans la norme GSM) est supérieur ou égal à 200.

Les indicateurs de qualité de service sont généralement calculés à partir de données de performance collectées sur différents noeuds du réseau, ces indicateurs de qualité de service pouvant en outre être consolidés spatialement et/ou temporellement. Un exemple d'indicateur de qualité de service est le taux de coupure d'appels (ou « call drop rate » en anglais) que l'on peut suivre par exemple à la journée (ou toute autre période) et par cellule (ou tout autre objet réseau).

A titre d'exemple de sélection d'objets réseau vérifiant un critère basé sur des indicateurs de qualité de service, on pourra sélectionner par exemple tous les BSCs et RNCs tels que le taux de coupure d'appels est supérieur à 3%.

Les paramètres de topologie du réseau incluent des paramètres tels que par exemple des paramètres de configuration de zones de localisation, tels que notamment le paramètre LAC (pour « Location Area Code ») défini dans la norme GSM.

A titre d'exemple de sélection d'objets réseau vérifiant un critère basé sur des paramètres de topologie du réseau, on pourra sélectionner par exemple toutes les cellules appartenant à une zone de localisation donnée (identifiée par une valeur donnée du paramètre LAC).

Les paramètres de relation de voisinage entre cellules incluent notamment, pour chaque cellule, une liste de cellules dites cellules voisines. On rappelle que d'une manière générale, dans ces systèmes, des mécanismes de changement de cellule sont prévus, permettant de maintenir une connexion lorsqu'une station mobile passe d'une zone couverte par une cellule à une zone couverte par une autre cellule. Une décision de changement de cellule est prise notamment sur la base de résultats de mesures radio effectuées sur des cellules voisines d'une cellule serveuse courante. Pour chaque cellule, une liste de cellules voisines est ainsi définie, cette liste étant généralement communiquée aux stations mobiles par le réseau radio.

A titre d'exemple de sélection d'objets réseau vérifiant un critère basé sur des paramètres de relations de voisinage entre cellules, on pourra sélectionner par exemple tous les RNCs qui gèrent au moins une cellule qui est une dans une liste des cellules voisines établie pour une cellule donnée (identifiée par un identifiant de cellule donné).

Les caractéristiques d'une cellule incluent généralement des paramètres tels que :
- la classe : par exemple Urbaine (« Urban » en anglais), Dense Urbaine (« Dense Urban » en anglais), Rurale (« Rural » en anglais), Suburbaine (« Suburban » en anglais), Environnements Intérieurs (« Indoor » en anglais), ...etc.,
- le type: par exemple microcellule, macrocellule, ...etc.,
- le spectre de fréquences : par exemple 900 MHz, 1800 MHz, ...etc.,
- la technologie d'accès radio : par exemple GSM (« Global System for Mobile communications »), GPRS (« Général Packet Radio Service »), EDGE (« Enhanced Data rates for GSM Evolution »), UMTS (« Universal Mobile Telecommunications System») ...etc.

A titre d'exemple de sélection d'objets réseau vérifiant un critère basé sur des caractéristiques de cellules, on pourra sélectionner par exemple toutes les microcellules GSM, ou encore toutes les cellules dont le sepctre de fréquences correspond à 900 MHz.

A titre d'exemple de sélection d'objets réseau vérifiant un critère de type géo-marketing, on pourra sélectionner par exemple toutes les cellules correspondant à une zone d'activités telle que par exemple une zone de bureaux, un centre commercial, ...etc.

A titre d'exemple de sélection d'objets réseau vérifiant un critère de type géographique, on pourra sélectionner par exemple toutes les cellules traversées par un axe routier ou ferroviaire, ...etc.

A titre d'exemple de sélection d'objets réseau vérifiant un critère de type temporel, on pourra sélectionner par exemple tous les RNCs tels que le taux de coupure d'appels est supérieur à 2% entre 12 H et 14 H, ou supérieur à 1 % les samedis ou pendant une période de congés.

Au moins un critère d'appartenance à une zone objet ayant été défini, comme il vient d'être illustré au moyen de divers exemples, une zone objet peut être constituée. En d'autres termes les objets réseau vérifiant ledit au moins un critère sont sélectionnés pour constituer une zone objet. Ceci peut être effectué par tout moyen ne nécessitant pas d'être décrit ici de manière détaillée, par exemple manuellement ou automatiquement. Une zone objet peut en outre être constituée dynamiquement, la contribution des objets à la constitution de cette zone objet pouvant en effet évoluer dans le temps ; ceci permet d'inclure des objets qui vérifient pour la première fois ledit au moins un critère, ou au contraire d'exclure des objets qui ne vérifient plus ce critère.

Une zone objet peut être utilisée dans toute fonction d'exploitation ou d'optimisation de réseau. En outre, on peut distinguer différents types d'utilisation, par exemple :
- utilisation comme une liste d'objets : dans ce cas la zone objet liste tous les objets réseau qui vérifient ledit au moins un critère. Une liste ainsi établie peut par exemple être affichée pour utilisation directe par l'utilisateur, ou bien encore être utilisée dans toute fonction d'optimisation, par exemple pour l'établissement d'un rapport de qualité de service, ou bien encore pour l'établissement d'un diagnostic de problèmes du réseau, ...etc.,
- utilisation comme un seul objet : dans ce cas, la zone objet est vue comme le résultat de la consolidation ou de l'agrégation de tous les objets vérifiant ledit au moins un critère à une date donnée, ou bien comme un résultat de consolidation ou d'agrégation évoluant au cours du temps du fait que la liste des objets vérifiant ledit critère peut varier au cours du temps. Les objets d'une même zone objet pouvant être de même type ou de type différent, la consolidation d'indicateurs de qualité de service peut être effectuée un même niveau correspondant à un même type d'objet, ou à différents niveaux possibles correspondant à différents types d'objets réseau possibles. Par exemple, il peut être intéressant de considérer la qualité de service de bout en bout, en tenant compte de tous les types d'objets (tels que par exemple BSS, NSS et liens de transmission associés) impliqués dans la transmission de bout en bout.

En outre, on peut distinguer différentes fonctions d'optimisation du réseau dans lesquelles des zones objet peuvent être utilisées, par exemple :
- des fonctions d'optimisation de paramétrage radio : des valeurs optimales pour un tel paramétrage (ou « tuning ») peuvent alors être appliquées en une seule opération à tous les objets d'une zone objet,
- des fonctions de suivi ou analyse de la qualité de service : l'opérateur peut suivre globalement la qualité de service pour tous les objets d'une zone objet (vus comme un seul objet) ; il peut par exemple comparer la qualité de service pour deux zones objet différentes ou étudier l'évolution dans le temps de la qualité de service pour une même zone objet,
- des fonctions d'analyse cartographique : l'opérateur peut par exemple afficher sur une carte tous les objets d'une zone objet ; il peut aussi faire des analyses cartographiques soit seulement sur les objets d'une seule zone, soit au contraire sur les objets de différentes zones,
- ...etc.

La présente invention permet ainsi notamment de gérer/optimiser/étudier le réseau à un niveau macroscopique, permettant ainsi de simplifier et/ou faciliter le travail de l'opérateur, notamment dans le cas d'accroissement de trafic, d'extension du réseau, d'introduction de nouvelles technologies et/ou de nouvelles fonctionnalités ...etc. La présente invention permet ainsi par exemple d'étudier la qualité de service à différents niveaux du réseau, par exemple au niveau BSS, ou RNS, ou NSS, ...etc., et est ainsi importante notamment dans le cas de réseau utilisant différentes technologies d'accès radio (telles que par exemple, UMTS, GSM, GPRS, EDGE, ...etc.), dans lesquels la variété et la complexité des objets rendent extrêmement complexes les tâches d'optimisation.

Comme indiqué plus haut, la présente invention est applicable à tous types d'objets réseau pouvant être manipulés ou gérés dans le cadre d'opérations d'optimisation du réseau radio, qu'il s'agisse d'objets logiques (tels que notamment cellules, liens radio ou terrestres...etc.), ou d'objets physiques (tels que notamment éléments de réseau, ensembles d'élements de réseau, ...etc.).

Un autre aspect de l'invention est maintenant décrit, dans lequel les objets réseau correspondent à des liens ou relations d'adjacence ou handover entre cellules. La notion de lien ou relation d'adjacence ou handover entre cellules est liée au concept de transfert intercellulaire ou handover. On rappelle que le but principal est d'éviter une coupure de communication lorsqu'une station mobile change de cellule. Ce concept de handover est ainsi très lié aux mouvements des utilisateurs dans le réseau. Un handover est généralement effectué d'une cellule dite cellule serveuse (ou « serving cell ») vers une cellule dite cellule cible (ou « target cell »). Une cellule donnée du réseau a donc au moins une cellule serveuse et une cellule cible qui lui sont liées, définisssant respectivement des liens d'adjacence ou handover entrant et sortant, un handover entrant étant effectué de cette cellule serveuse vers cette cellule donnée, et un handover sortant étant effectué de cette cellule donnée vers cette cellule cible. Notamment, un lien d'adjacence ou de handover peut être défini entre deux cellules lorsque l'une de ces cellules est dans une liste de cellules voisines établie pour une autre de ces cellules, une telle liste de cellules voisines étant établie pour les besoins des procédures de handover, comme rappelé précédemment. Une zone objet correspond à un ensemble de liens d'adjacence entre cellules, qui vérifient un critère donné d'appartenance à cet ensemble, une telle zone objet étant aussi appelée zone d'adjacence.

Actuellement, les techniques d'optimisation de réseau radio permettent à l'opérateur d'effectuer des opérations d'optimisation telles que créer, effacer modifier ou suivre la qualité de service, sur des liens d'adjacence entre cellules, seulement à un niveau individuel, mais non d'effectuer des opérations d'optimisation à un niveau global, telles que notamment étudier à un niveau global les relations de voisinage déclarées entre cellules et la qualité de service associée, notamment en utilisant des indicateurs de qualité de service consolidés au niveau d'une zone d'adjacence.

A titre d'exemple de tels indicateurs de qualité de service pouvant être consolidés au niveau d'une zone d'adjacence, on peut considérer par exemple : le nombre de changements de cellule observés d'une cellule donnée vers une cellule voisine, ...etc.

Sur la base de tels indicateurs de qualité de service consolidés au niveau de zones d'adjacence, l'opérateur peut ainsi mieux analyser et comprendre les mouvements des usagers de son réseau.

En d'autres termes, suivant un de ses différentes aspects, la présente invention permet à l'opérateur de :
- définir au moins un type de mouvement d'utilisateurs de son réseau, c'est-à-dire choisir un ou plusieurs critères pour regrouper des liens ou relations d'adjacence en un même groupe appelé aussi zone d'adjacence (des exemples de critères et de types de mouvements seront donnés dans ce qui suit).
- étudier au moins un type de mouvement, par exemple au moyen d'indicateurs de qualité de service tels que des indicateurs de qualité de service classiques, utilisés habituellement. Ces indicateurs de qualité de service sont habituellement utilisés pour suivre ou analyser la qualité de service au niveau d'un lien d'adjacence considéré individuellement. Au contraire, dans la présente invention, ils sont consolidés au niveau d'une zone d'adjacence, pour suivre ou analyser la qualité de service au niveau de cette zone d'adjacence.

Ainsi, en complétant les moyens actuels d'analyse et d'investigation, la présente invention permet à l'opérateur une nouvelle façon d'appréhender la qualité de service dans le réseau. La présente invention permet également à l'opérateur de mieux comprendre les mouvements ou tendances de mouvements dans certaines zones, et aide par exemple à en déduire d'éventuels problèmes de dimensionnement du réseau dans les zones considérées.

Par exemple, l'opérateur peut étudier différents types de mouvements des usagers de son réseau, pouvant être associés à différents types de zones d'adjacence, tels que par exemple :
- des mouvements définis en considérant un type de trafic donné, par exemple les mouvements observés d'un axe routier vers une zone d'activité correspondant par exemple à une zone de bureaux,
- des mouvements définis d'un type d'objet vers un autre type d'objet, par exemple des mouvements de cellules de type macro-cellule vers des cellules de type environnement intérieur (ou « indoor »), ou encore, dans un contexte multi-technologies, des mouvements de cellules de type GSM vers des cellules de type UMTS par exemple, ou vice versa,
- des mouvements définis d'une zone géographique vers une autre, par exemple des mouvements d'une zone A (définie avec des critères géographiques) vers une zone B (définie avec des critères géographiques)
- ...etc.

En d'autres termes, dans ces exemples, ledit critère d'appartenance à une zone d'adjacence correspond à un critère vérifié par les cellules impliquées dans des liens d'adjacence entre cellules, par exemple :
- un critère de type géo-marketing,
- un citère basé sur des caractéristiques de cellules,
- un critère de type géographique,
- ...etc.

Par exemple, pour un type de mouvement défini en considérant un type de trafic donné, le but peut être de mieux estimer et comprendre les habitudes des utilisateurs du réseau, de détecter d'éventuelles spécificités des zones étudiées, et d'adapter en conséquence le dimensionnement du réseau, si nécessaire.

Par exemple, pour un type de mouvements défini d'un type d'objet réseau vers un autre type d'objet réseau, le but peut être de permettre des analyses de qualité de service et une éventuelle optimisation en utilisant des paramètres adaptés, ...etc., car le type de mouvement est alors plus formalisé que dans le cas précédent (où interviennent principalement les habitudes des utilisateurs) et donc de meilleurs moyens d'optimisation sont alors disponibles.

Ainsi, sur la base d'un ou plusieurs critères, un type de mouvement associé peut être défini, c'est-à-dire des cellules serveuse et cible correspondantes (et en conséquence des liens ou relations d'adjacence) peuvent être sélectionnés. Des groupes de liens d'adjacence, ou « zones de mouvement » peuvent être créées, et des consolidations peuvent être effectuées pour travailler à ce nouveau niveau avec le système de qualité de service existant (indicateurs de qualité de service habituels, rapports de qualité de service, diagnostic, ...etc.).

La présente invention offre également la possibilité d'étudier les mouvements dans une zone donnée, par exemple pour savoir si les mouvements dans cette zone correspondent à un type de mouvement tel que par exemple un type de mouvement défini en considérant un type de trafic donné, ou plus généralement pour étudier la répartition des mouvements en considérant toutes les sortes de mouvements observés dans la zone considérée.

On peut noter un intérêt supplémentaire de cette approche d'analyse selon le type de mouvement, qui est de compléter l'approche habituelle d'analyse selon le trafic. Par exemple, dans une zone telle qu'un centre commercial par exemple, il peut y avoir un faible niveau de handover, complété par un fort niveau de trafic.

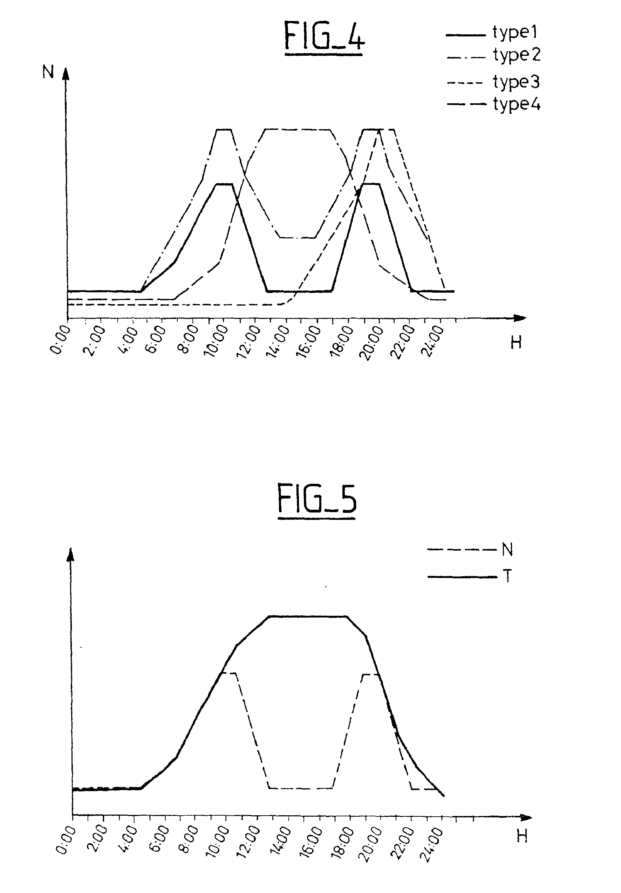

Des exemples de résultats d'analyse de la qualité de service associée à différents types de mouvements sont illustrés au moyen des figures 4 et 5.

La figure 4 illustre, pour différents types de mouvements, le nombre N de changements de cellule (ou « handovers » en anglais) en fonction de l'heure H de la journée et pendant les jours de la semaine correspondant à des jours ouvrables. A titre d'exemple, les différents types de mouvements suivants ont été considérés :
- des mouvements de type 1, correspondant à des mouvements observés d'un axe routier vers une zone de bureaux,
- des mouvements de type 2, correspondant à des mouvements observés d'un axe routier vers un autre,
- des mouvements de type 3, correspondant à des mouvements observés à l'intérieur d'une ville,
- des mouvements de type 4, correspondant à des mouvements observés d'un point quelconque vers un centre commercial.

La figure 5 illustre, pour les mouvements de type 1 par exemple, le nombre N de changements de cellule (ou « handovers » en anglais) en fonction de l'heure H de la journée et pendant les jours de la semaine correspondant à des jours non ouvrables (samedis par exemple). Ce nombre de changements de cellules a été illustré au moyen d'une courbe en pointillés, et le trafic observé T (en Erlang) a été illustré au moyen d'une courbe en traits continus.

D'autres exemples de critères pour la formation de zones objet (notamment de zones d'adjacence) et/ou d'autres exemples de réalisation d'opérations d'optimisation de réseau utilisant de telles zones objet (notamment de telles zones d'adjacence) sont bien entendu possibles, et on comprendra qu'il n'est pas possible d'en donner ici une liste exhaustive.

Par ailleurs, outre un procédé tel qu'illustré ci-dessus au moyen de divers exemples, un autre objet de la présente invention est un système pour l'exploitation d'un réseau de communications mobiles, ledit système comportant, d'une manière générale:
- des moyens pour définir au moins un critère d'appartenance d'objets réseau à au moins un groupe d'objets réseau, ledit groupe étant aussi appelé zone objet,
- des moyens pour constituer au moins une zone objet, à partir objets réseau vérifiant ledit au moins un critère,
- des moyens pour réaliser au moins une opération d'optimisation de réseau radio, utilisant ladite au moins une zone objet ainsi constituée.

Un autre objet de la présente invention est une station de travail pour l'exploitation d'un réseau de communications mobiles, ladite station comportant, d'une manière générale:
- des moyens (tels que notamment des moyens d'interface homme-machine) pour permettre à l'utilisateur de définir au moins un critère d'appartenance d'objets réseau à au moins un groupe d'objets réseau, ledit groupe étant aussi appelé zone objet.

Par exemple, dans le cas de station de travail utilisant une interface avec l'utilisateur de type « interface graphique », ou GUI (pour « Graphical User Interface ») utilisant des moyens de dialogue avec l'utilisateur (tels que par exemple menus, fenêtres associées à différents contextes, ...etc.) un menu spécifique peut être utilisé, pour offrir à l'utilisateur la possibilité de définir des zones objet. Ce menu peut par exemple commander l'affichage d'une fenêtre offrant à l'utilisateur la possibilité de définir un critère ou une combinison de plusieurs critères. L'opérateur peut aussi ajouter une liste d'objets à un ensemble d'objets (constitué automatiquement) vérifiant le ou les critères choisis. Il est aussi possible de définir seulement une liste d'objets (et non de définir un ou plusieurs critères associés).

Un autre objet de la présente invention est une station de travail pour l'exploitation d'un réseau de communications mobiles, ladite station comportant, d'une manière générale :
- des moyens (tels que notamment des moyens d'interface homme-machine) pour permettre à l'utilisateur de réaliser au moins une opération d'optimisation de réseau radio, utilisant un groupe d'objets réseau vérifiant au moins un critère d'appartenance d'objets réseau à au moins un groupe d'objets réseau, ledit groupe étant aussi appelé zone objet.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'exploitation d'un réseau de communications mobiles, ledit procédé comportant des étapes de :
- définition d'au moins un critère d'appartenance d'objets réseau à au moins un groupe d'objets réseau, ledit groupe étant aussi appelé zone objet,
- constitution (21) d'au moins une zone objet, à partir d'objets réseau vérifiant ledit au moins un critère,
- réalisation d'au moins une opération d'optimisation de réseau radio, utilisant ladite au moins une zone objet ainsi constituée.

2. Procédé selon la revendication 1, dans lequel dans lequel ledit critère d'appartenance est tel que tous les objets d'une même zone objet sont des objets de même type.

3. Procédé selon la revendication 1, dans lequel dans lequel ledit critère d'appartenance est tel que tous les objets d'une même zone objet sont des objets de types différents.

4. Procédé selon l'une des revendications 1 à 3, dans lequel un type d'objet correspond à une cellule.

5. Procédé selon l'une des revendications 1 à 3, dans lequel un type d'objet correspond à un élément de réseau.

6. Procédé selon l'une des revendications 1 à 3, dans lequel un type d'objet correspond à un ensemble d'éléments de réseau.

7. Procédé selon l'une des revendications 1 à 3, dans lequel un type d'objet correspond à une relation d'adjacence entre cellules.

8. Procédé selon l'une des revendications 1 à 7, dans lequel ladite étape de constitution est effectuée dynamiquement.

9. Système pour l'exploitation d'un réseau de communications mobiles, ledit système comportant :
- des moyens pour définir au moins un critère d'appartenance d'objets réseau à au moins un groupe d'objets réseau, ledit groupe étant aussi appelé zone objet,
- des moyens pour constituer au moins une zone objet, à partir d'objets réseau vérifiant ledit au moins un critère,
- des moyens pour réaliser au moins une opération d'optimisation de réseau radio, utilisant ladite au moins une zone objet ainsi constituée.

10. Station de travail pour l'exploitation d'un réseau de communications mobiles, ladite station comportant :
- des moyens pour permettre à l'utilisateur de définir au moins un critère d'appartenance d'objets réseau à au moins un groupe d'objets réseau, ledit groupe étant aussi appelé zone objet.

11. Station de travail pour l'exploitation d'un réseau de communications mobiles, ladite station comportant :
- des moyens pour permettre à l'utilisateur de réaliser au moins une opération d'optimisation de réseau radio, utilisant un groupe d'objets réseau vérifiant au moins un critère d'appartenance d'objets réseau à au moins un groupe d'objets réseau, ledit groupe étant aussi appelé zone objet.
